# EUROPÄISCHE PATENTSCHRIFT

(11) **EP 0 985 842 B1**
(45) Veröffentlichungstag und Bekanntmachung des Hinweises auf die Patenterteilung: **18.09.2002**
(21) Anmeldenummer: 99111835.7
(22) Anmeldetag: 19.06.1999
(51) Int. Cl.: F16D 65/12, F16D 66/00

(54) **Bremsscheibe für eine Scheibenbremse**
Brake disc for a disc brake
Disque de frein pour frein à disque

(30) Priorität: 09.09.1998 DE 19841096
(43) Veröffentlichungstag der Anmeldung: 15.03.2000
(73) Patentinhaber: Hermann Peters GmbH & Co., 58256 Ennepetal (DE)
(72) Erfinder: Cleffmann, Eckard, 42929 Wermelskirchen (DE)
(74) Vertreter: Becker, Thomas, Dr., Dipl.-Ing.

(56) Entgegenhaltungen:
- EP-A- 0 133 526
- EP-A- 0 606 800
- EP-A- 0 670 434
- DE-A- 19 512 934
- FR-A- 1 535 705
- GB-A- 1 492 828

## Beschreibung

Die Erfindung betrifft eine Bremsscheibe für eine Fahrzeug-Scheibenbremse, sowie eine Scheibenbremse mit einer solchen Bremsscheibe.

Der Begriff Fahrzeug schließt dabei sowohl Motorräder wie Personenkraftwagen, insbesondere aber Nutzfahrzeuge, Schienenfahrzeuge, Baumaschinen, Lastkraftwagen und Anhänger ein.

Fahrzeug-Scheibenbremsen sind seit langem bekannt. Sie umfassen insbesondere eine Bremsscheibe, die auf ihren beiden Hauptflächen umfangsseitig ringförmige Bremsflächen aufweist, gegen die korrespondierende Bremsbeläge (Bremsklötze) beim Bremsvorgang geführt werden, wobei die Bremsbeläge wiederum in einem Gehäuse angeordnet sind.

Die Bremsflächen enden in der Regel mit geringem Abstand zum Außenumfang der Bremsscheibe, wodurch benachbart zu den Bremsflächen jeweils ein äußerer, schmaler Ringstreifen ausgebildet wird, der von den Bremsbelägen unberührt bleibt.

Mit zunehmender Zahl der Bremsvorgänge erfolgt nicht nur ein Verschleiß der Bremsbeläge, sondern auch ein Verschleiß (Abrieb) im Bereich der Bremsflächen, die entsprechend mit zunehmendem Verschleiß in die vorgenannten Hauptflächen "hineinwandern", während die genannten äußeren Ringstreifen "stehenbleiben".

Aus Sicherheitsgründen muß der Verschleißzustand der Bremsscheiben und Bremsbeläge regelmäßig überprüft werden. Ein besonderes Problem stellt dabei die Ermittlung der Reststärke im Bereich der Bremsflächen dar. Eine ausschließlich visuelle Überprüfung ist nicht möglich. Der Raum zwischen den Bremsbelägen und den Bremsflächen ist relativ gering, zudem häufig verschmutzt und der beschriebene "Überstand" der äußeren Ringstreifen der Bremsscheibe erschwert eine optische Überprüfung zusätzlich.

Bisher angewendete Methoden zur Erkennung des Verschleißzustandes beschränken sich deshalb darauf, die Dicke der Bremsscheiben mit Schieblehren zu vermessen. Aufgrund der engen räumlichen Verhältnisse, insbesondere bei montierten Reifen, ist dies aber zumindest umständlich.

In der DE 94 03 747 U1 ist deshalb vorgeschlagen worden, in mindestens einer der Bremsflächen einer Bremsscheibe Vertiefungen mit einer dem maximal zulässigen Verschleiß der Bremsfläche entsprechenden Tiefe auszubilden.

Sind die Bremsflächen bis auf den Grund dieser Vertiefungen verschlissen, muß die Bremsscheibe ausgewechselt werden.

In der Praxis hat sich diese Verschleißerkennung aber als allenfalls theoretisch erwiesen, da es aus den eingangs genannten Gründen kaum möglich ist, den Raum zwischen den Bremsbelägen und den Bremsflächen zuverlässig optisch zu überwachen. Häufig verstopfen pulverförmige Reste der Bremsbeläge die Vertiefungen, so daß eine optische Erkennung völlig wegfällt.

Der Erfindung liegt insoweit die Aufgabe zugrunde, eine Bremsscheibe sowie eine Scheibenbremse der genannten Art anzubieten, die eine zuverlässige Verschleißerkennung auf einfachem Wege ermöglicht.

Dabei geht die Erfindung von der Überlegung aus, sich die Existenz des eingangs genannten äußeren Ringstreifens (den Bremsflächen benachbart) zunutze zu machen und in diesem Bereich mindestens eine Ausnehmung anzuordnen, die vom äußeren Rand der Bremsfläche durchgehend bis zum äußeren Rand der Bremsscheibe verläuft. Sowohl die genannten Ringstreifen als auch die genannte(n) Ausnehmung(en) liegen außerhalb des aktiven Bremsbereiches und damit außerhalb der Bremsbeläge und Bremsflächen, so daß sie jederzeit von außen gut optisch eingesehen werden können. In gleicher Weise kann auch ein den Bremsflächen benachbarter innerer Ringstreifen ausgebildet werden.

Entsprechend leicht läßt sich dann feststellen, ob die "aktiven" Bremsflächen bereits bis zum Grund der entsprechenden Ausnehmung verschlissen sind (in diesem Fall muß die Bremsscheibe ausgewechselt werden) oder ob zwischen beiden noch ein "Grat" besteht, der die Weiterbenutzung der Bremsscheibe erlaubt.

In ihrer allgemeinsten Ausführungsform betrifft die Erfindung danach eine Bremsscheibe für eine Fahrzeng-Scheibenbremse, wobei die Bremsscheibe, auf ihren beiden Hauptflächen außenseitig ringförmige Bremsflächen aufweist, die mit geringem Abstand zum Außenumfang und/oder Innenumfang der Bremsscheibe unter Ausbildung eines äußeren, schmalen Ringstreifens enden, wobei mindestens einer der Ringstreifen mindestens eine in Axialrichtung der Bremsscheibe verlaufende Ausnehmung aufweist, deren Tiefe maximal einem maximal zulässigen Verschleiß der Bremsfläche entspricht.

Um je nach Stellung der Bremsscheibe eine jederzeit optimale optische Verschleißerkennung zu ermöglichen bietet es sich an, nicht nur eine, diskrete Ausnehmung im Bereich des Randstreifens anzuordnen, sondern mehrere, die dann beispielsweise mit gleichem Winkelabstand zueinander angeordnet sind.

Werden beispielsweise sechs derartige Ausnehmungen angeordnet, so steht alle 60 Grad eine entsprechende Ausnehmung zur optischen Verschleißerkennung zur Verfügung.

Ebenso ist es aber auch möglich und wird nach einer weiteren Ausführungsform vorgeschlagen, daß die Ausnehmung umlaufend durchgehend ausgeführt ist, das heißt, daß der gesamte äußere Ringstreifen "weggeschnitten" ist. In diesem Fall wird die optische Verschleißerkennung in jeder beliebigen Winkelstellung der Bremsscheibe ermöglicht.

Eine beispielhafte Bremsscheibe weist eine Stärke (Dicke) von 45 mm auf. In diesem Fall ist der maximale Verschleißzustand dann erreicht, wenn die Dicke der Bremsscheibe auf beispielsweise 37 mm reduziert ist, woraus im Umkehrschluß folgt, daß die Tiefe der Ausnehmungen beziehungsweise umlaufenden Nut auf beiden Seiten der Bremsscheibe etwa 4 mm beträgt.

Beispielsweise bei Motorrädern kann die Dicke der Bremsscheibe geringer sein.

Die Ausnehmungen sollten deshalb grundsätzlich - in Radialrichtung der Bremsscheibe betrachtet - eine Breite zwischen 2 und 8 mm und - in Axialrichtung der Bremsscheibe betrachtet - eine Tiefe von 1 bis 6 mm aufweisen, je nach Anwendungsfall. Für Scheibenbremsen von Lastkraftwagen wird die Breite üblicherweise zwischen 3 bis 5 mm und die Tiefe ebenfalls zwischen 3 und 5 mm betragen.

Dabei kann die Breite der Tiefe entsprechen.

Während die diskreten Ausnehmungen entweder bei der Herstellung (beim Guß) der Bremsscheibe mit ausgeformt werden oder nachträglich zum Beispiel ausgefräst werden können bietet es sich bei einer umlaufenden Nut an, diese direkt bei der Herstellung der Bremsscheibe werkzeugmäßig zu berücksichtigen. Selbstverständlich kann aber auch hier der randseitige Falz nachträglich durch Abdrehen oder Ausfräsen hergestellt werden.

Trotz einer äußerst einfachen konstruktiven Lösung stellt die erfindungsgemäße Weiterbildung einer Bremsscheibe einen wesentlichen Fortschritt und eine wesentliche Erleichterung bei der Verschleißerkennung dar. Auf Werkzeuge, wie Schieblehren, kann vollständig verzichtet werden.

Weitere Merkmale der Erfindung ergeben sich aus den Merkmalen der Unteransprüche sowie den sonstigen Anmeldungsunterlagen.

Die Erfindung wird nachstehend anhand zweier Ausführungsbeispiele näher erläutert.

Dabei zeigen - jeweils in schematisierter Darstellung -
- Figur 1:: einen Längsschnitt durch eine erste Ausführungsform einer Bremsscheibe.
- Figur 2:: eine Seitenansicht einer zweiten Ausführungsform einer Bremsscheibe.

In den Figuren sind gleiche oder gleichwirkende Bauteile mit gleichen Bezugsziffern dargestellt.

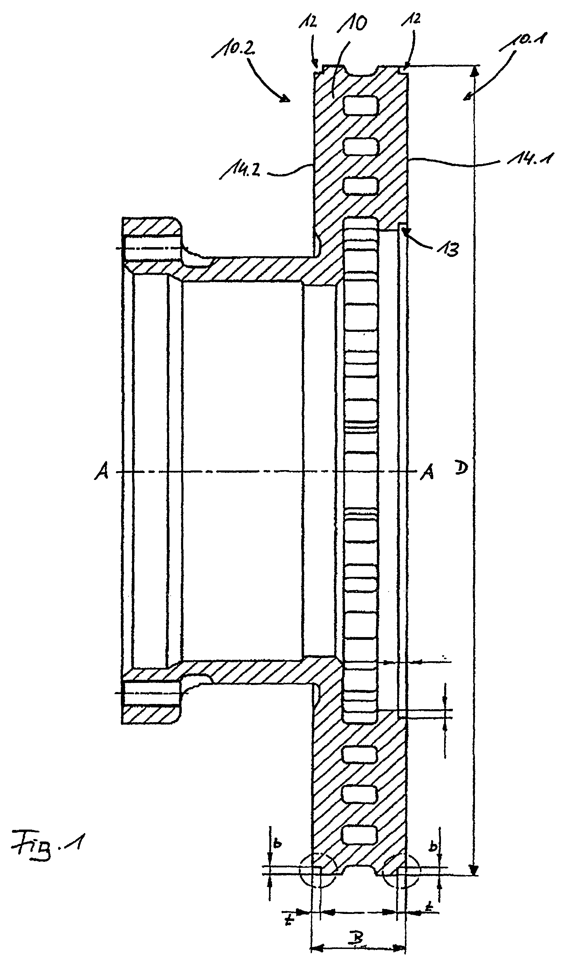

Figur 1 zeigt eine Bremsscheibe 10 mit zwei Hauptflächen 10.1, 10.2.

Der Außendurchmesser der Bremsscheibe 10 ist mit D angegeben.

Am Außenumfang weist die Bremsscheibe 10 beidseitig eine falzartige Ausnehmung 12 auf, die - in Richtung einer Achse A der Bremsscheibe 10 eine Tiefe t und in Radialrichtung eine Breite b aufweist. Hierdurch wird auf beiden Seiten der Bremsscheibe 10 eine Art "Stufe" ausgebildet.

An diese, jeweils nach innen versetzten umlaufenden Ringstreifen schließen sich auf beiden Seiten der Bremsscheibe 10 kreisringförmige Bremsflächen 14.1, 14.2 an.

Die äußere Bremsfläche 14.1 wird innenseitig begrenzt von einer weiteren Auskehlung 13 analog der Ausnehmung 12.

Gegen die Bremsflächen 14.1, 14.2 wirken (nicht dargestellte) Bremsbeläge, deren Breite (in Radialrichtung der Bremsscheibe 10 betrachtet) dem Innenabstand der Ausnehmungen 12, 13 entspricht, die also vollständig auf die zugehörigen Bremsflächen 14.1, 14.2 wirken.

Bei Benutzung kommt es zu einem Verschleiß der Bremsflächen 14.1, 14.2, so daß die Breite B der Bremsscheibe 10 zunehmend geringer wird, wobei sich entsprechend die Tiefe t der Ausnehmungen 12, 13 verringert.

Die Verringerung der Tiefe t zeigt einen zunehmenden Verschleiß der Bremsscheibe 10 an. Ist die Tiefe t der Nuten 12, 13 auf "null" reduziert besteht keine Stufe mehr zwischen der Bremsfläche 14.1 und den beidseitigen Ausnehmungen 12, 13. In diesem Fall ist der maximal zulässige Verschleiß der Bremsscheibe 10 erreicht und die Bremsscheibe 10 muß ausgetauscht werden.

Die optische Erkennung dieses Verschleißzustandes ist ohne weiteres von außen möglich, da die Verschleißanzeige am äußeren Umfang der Bremsscheibe 10 angeordnet ist.

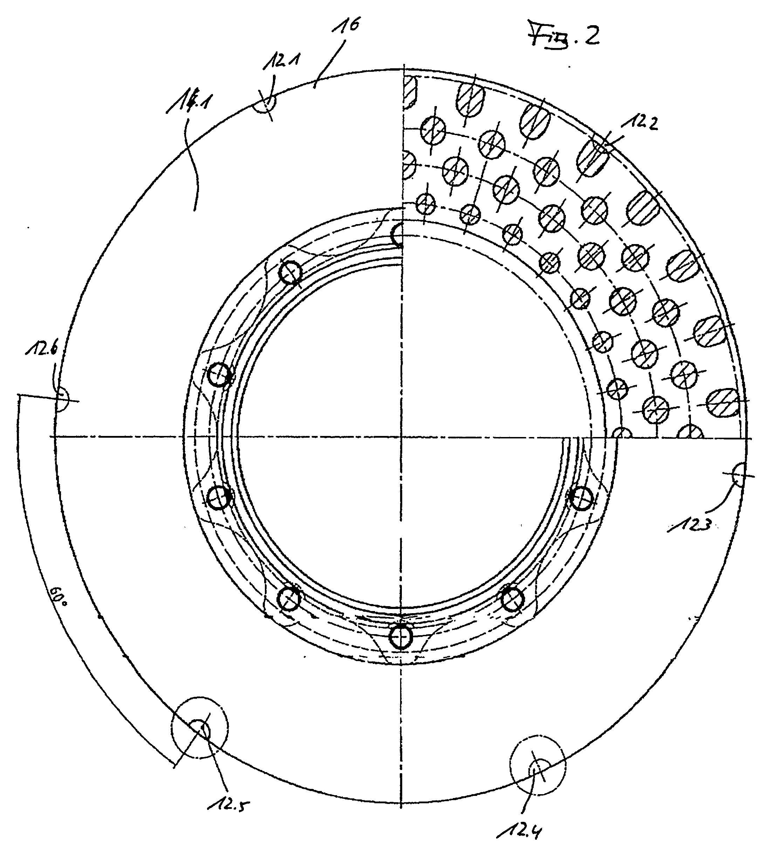

Das Ausführungsbeispiel nach Figur 2 unterscheidet sich vom Ausführungsbeispiel nach Figur 1 dadurch, daß anstelle einer umlaufenden Nut (Ausnehmung) 12 insgesamt sechs diskrete Ausnehmungen 12.1 bis 12.6 in dem, der Bremsfläche 14.1 außenseitig benachbarten Ringstreifen 16 vorgesehen sind. Dabei sind die einzelnen Ausnehmungen in einem Winkelabstand von 60 Grad zueinander angeordnet.

Die Tiefe der Ausnehmungen 12.1 bis 12.6 entspricht der Tiefe der Ringnut 12 (t).

Analog wie am Beispiel der Figur 1 erläutert wird auch hier der maximale Verschleißzustand optisch von außen jederzeit dann erkennbar, wenn die Grundfläche der Ausnehmungen 12.1 bis 12.6 fluchtend mit der (verschlissenen) Bremsfläche 14.1 ist. Dies kann beispielsweise auch mit einem einfachen Werkzeug, wie einem Schraubenzieher oder einem Kugelschreiber, abgetastet werden.

## Patentansprüche

1. Bremsscheibe für eine Fahrzeug-Scheibenbreme, wobei die Bremsscheibe (10), auf ihren beiden Hauptflächen (10.1, 10.2) außenseitig ringförmige Bremsflächen (14.1., 14.2) aufweist, die mit geringem Abstand zum Außenumfang und/oder Innenumfang der Bremsscheibe (10) unter Ausbildung eines äußeren, schmalen Ringstreifens (16) enden, wobei mindestens einer der Ringstreifen (16) mindestens eine in Axialrichtung der Bremsscheibe (10) verlaufende Ausnehmung (12, 12.1...12.6) aufweist, deren Tiefe maximal einem maximal zulässigen Verschleiß der Bremsfläche (14.1, 14.2) entspricht.

2. Bremsscheibe für eine Fahrzeug-Scheibenbremse nach Anspruch 1, bei der der Ringstreifen (16) mehrere, im gleichen Winkelabstand zueinander verlaufende Ausnehmungen (12.1...12.6) aufweist.

3. Bremsscheibe für eine Fahrzeug-Scheibenbremse nach Anspruch 1, bei der die Ausnehmung (12) umlaufend durchgehend ausgeführt ist.

4. Bremsscheibe für eine Fahrzeug-Scheibenbremse nach Anspruch 1, bei der die Ausnehmung (12, 12.1...12.6) - in Radialrichtung der Bremsscheibe (10) betrachtet - eine Breite zwischen 2 und 8 mm und - in Axialrichtung der Bremsscheibe (10) betrachtet - eine Tiefe von 1 bis 6 mm aufweist.

5. Bremsscheibe für eine Fahrzeug-Scheibenbremse nach Anspruch 4, bei der die Ausnehmung (12, 12.1...12.6) - in Radialrichtung der Bremsscheibe (10) betrachtet - eine Breite zwischen 3 bis 5 mm und - in Axialrichtung der Bremsscheibe (10) betrachtet - eine Tiefe von 3 bis 5 mm aufweist.

6. Bremsscheibe für eine Fahrzeug-Scheibenbremse nach Anspruch 4, bei der die Breite der Ausnehmungen gleich deren Tiefe ist.

7. Scheibenbremse für ein Fahrzeug mit einer Bremsscheibe nach einem der Ansprüche 1 bis 6.

## Claims

1. A brake disc for a vehicle disc brake, whereby the brake disc (10) has on its two main faces (10.1, 10.2) braking areas (14.1,14.2) ring-shaped on the outside, which end at a small distance from the outer periphery and/or inner periphery of the brake disc (10) thereby forming an outer narrow annular strip (16), whereby at least one of the annular strips (16) has at least one cut-out (12, 12.1 ... 12.6) running in the axial direction of the brake disc (10), whose depth corresponds at most to the maximum permissible wear on the braking area (14.1, 14.2).

2. The brake disc for a vehicle disc brake according to claim 1, in which the annular strip (16) has several cut-outs (12.1 ... 12.6) running at the same angular distance from one another.

3. The brake disc for a vehicle disc brake according to claim 1, in which the cut-out (12) is made such that it runs round continuously.

4. The brake disc for a vehicle disc brake according to claim 1, in which the cut-out (12, 12.1 ... 12.6) - viewed in the radial direction of the brake disc (10) - has a width between 2 and 8 mm and - viewed in the axial direction of the brake disc (10) - a depth from 1 to 6 mm.

5. The brake disc for a vehicle disc brake according to claim 4, in which the cut-out (12, 12.1 ... 12.6) - viewed in the radial direction of the brake disc (10) - has a width between 3 and 5 mm and - viewed in the axial direction of the brake disc (10) - a depth from 3 to 5 mm.

6. The brake disc for a vehicle disc brake according to claim 4, in which the width of the cut-outs is equal to their depth.

7. A disc brake for a vehicle with a brake disc according to any one of claims 1 to 6.

## Revendications

1. Disque de frein pour frein à disque de véhicule, le disque de frein (10) présentant sur ses deux surfaces principales (10.1, 10.2), du côté extérieur, des surfaces de freinage (14.1, 14.2) de forme circulaire, qui se terminent à une courte distance du volume extérieur et/ou du volume intérieur du disque de frein (10) en formant une bande circulaire extérieure étroite (16), au moins une des bandes circulaires (16) présentant un évidement (12, 12.1... 12.6) s'étendant dans le sens axial du disque de frein (10) et dont la profondeur équivaut au maximum à une usure admissible maximale de la surface de freinage (14.1, 14.2).

2. Disque de frein pour frein à disque de véhicule selon la revendication 1, dans lequel la bande circulaire (16) présente plusieurs évidements (12.1... 12.6) s'étendant dans le même écart d'angle les uns par rapport aux autres.

3. Disque de frein pour frein à disque de véhicule selon la revendication 1, dans lequel l'évidemen (12) est réalisé en continu en rotation.

4. Disque de frein pour frein à disque de véhicule selon la revendication 1, dans lequel l'évidement (12, 12.1... 12.6) -considéré dans le sens radial du disque de frein (10)- présente une largeur entre 2 et 8 mm et -considéré dans le sens axial du disque de frein (10)- présente une profondeur de 1 à 6 mm.

5. Disque de frein pour frein à disque de véhicule selon la revendication 4, dans lequel l'évidemen (12, 12.1... 12.6) -considéré dans le sens radial du disque de frein (10)- présente une largeur entre 3 et 5 mm et--considéré dans le sens axial du disque de frein (10)- présente une profondeur de 3 à 5 mm.

6. Disque de frein pour frein à disque de véhicule selon la revendication 4, dans lequel la largeur des évidements est égale à leur profondeur.

7. Frein à disque pour véhicule avec un disque de frein selon une des revendications 1 à 6.
